# EUROPEAN PATENT APPLICATION

(11) **EP 3 778 194 A1**
(43) Date of publication of application: **17.02.2021**
(21) Application number: 18911435.8
(22) Date of filing: 30.03.2018
(51) Int. Cl.: B29C 64/25, B33Y 30/00

(54) **THREE-DIMENSIONAL LAMINATE SHAPING DEVICE AND METHOD FOR MANUFACTURING THREE-DIMENSIONAL LAMINATE SHAPING DEVICE**

(71) Applicant: Cmet Inc., Yokohama-shi, Kanagawa 222-0033 (JP); Technology Research Association For Future Additive Manufacturing, Chuo-ku, Tokyo 103-0027 (JP)
(72) Inventor: MIYANO Hideaki, Yokohama-shi, Kanagawa 222-0033 (JP); OOBA Yoshikazu, Yokohama-shi, Kanagawa 222-0033 (JP); SUZUKI Koukichi, Yokohama-shi, Kanagawa 222-0033 (JP); SUWA Mitsunori, Yokohama-shi, Kanagawa 222-0033 (JP)
(74) Representative: TBK
(86) International application number: PCT/JP2018/013886
(87) International publication number: WO 2019/187111

(57) **Abstract**

The overall structure of a three-dimensional laminating and shaping apparatus is downsized. There is provided a three-dimensional laminating and shaping apparatus comprises a case that houses a shaping table, at least two arms that are extended in a horizontal direction of the case and coupled to the shaping table to support the shaping table, and a moving unit that moves the at least two arms in a vertical direction of the case. The case includes a slit that is formed on a side wall of the case with extending in the vertical direction of the case, and through which one of the at least two arms moving in the vertical direction of the case passes, a tape-like seal member that has upper and lower ends fixed inside the side wall with extending in the vertical direction of the case to prevent leakage of powder particles to outside of the case through the slit by covering the slit, and a winding structure in which the tape-like seal member winds so that the tape-like seal member extends to inside of the case in an inwardly convex shape at a position where an end of the one of the at least two arms passes through the slit in the side wall of the case.

## Description

### TECHNICAL FIELD

The present invention relates to a three-dimensional laminating and shaping apparatus and a method of manufacturing the three-dimensional laminating and shaping apparatus.

### BACKGROUND ART

In the above technical field, patent literature 1 discloses a technique of raising or lowering a shaping table by an elevating mechanism coupled to the lower surface of the shaping table.

### CITATION LIST

### PATENT LITERATURE

Patent literature 1: Japanese Patent Laid-Open No. 2017-170644

### SUMMARY OF THE INVENTION

### TECHNICAL PROBLEM

In the technique described in the above literature, however, it is impossible to downsize the overall structure of a three-dimensional laminating and shaping apparatus since the elevating mechanism is provided below the shaping table.

The present invention provides a technique of solving the above-described problem.

### SOLUTION TO PROBLEM

One example aspect of the present invention provides a three-dimensional laminating and shaping apparatus comprising:
a case that houses a shaping table;
at least two arms that are extended in a horizontal direction of the case and coupled to the shaping table to support the shaping table; and
a moving unit that moves the at least two arms in a vertical direction of the case,
the case including
a slit that is formed on a side wall of the case with extending in the vertical direction of the case, and through which one of the at least two arms moving in the vertical direction of the case passes,
a tape-like seal member that has upper and lower ends fixed inside the side wall with extending in the vertical direction of the case to prevent leakage of powder particles to outside of the case through the slit by covering the slit, and
a winding structure in which the tape-like seal member winds so that the tape-like seal member extends to inside of the case in an inwardly convex shape at a position where an end of the one of the at least two arms passes through the slit in the side wall of the case.

Another example aspect of the present invention provides a method of manufacturing a three-dimensional laminating and shaping apparatus including
a case that houses a shaping table,
at least two arms that are extended in a horizontal direction of the case and coupled to the shaping table to support the shaping table, and
a moving unit that moves the at least two arms in a vertical direction of the case,
the method comprising:
   forming a slit on a side wall of the case with extending in the vertical direction of the case, through which one of the at least two arms moving in the vertical direction of the case passes;
   providing a tape-like seal member that has upper and lower ends fixed inside the side wall with extending in the vertical direction of the case to prevent leakage of powder particles to outside of the case through the slit by covering the slit; and
   providing a winding structure in which the tape-like seal member winds so that the tape-like seal member extends to inside of the case in an inwardly convex shape at a position where an end of the one of the at least two arms passes through the slit in the side wall of the case.

### ADVANTAGEOUS EFFECTS OF INVENTION

According to the present invention, it is possible to downsize the overall structure of a three-dimensional laminating and shaping apparatus.

### BRIEF DESCRIPTION OF DRAWINGS

Fig. 1A is a front view for explaining the structure of a three-dimensional laminating and shaping apparatus according to the first example embodiment of the present invention;
Fig. 1B is a perspective view for explaining a slit had by a case of the three-dimensional laminating and shaping apparatus according to the first example embodiment of the present invention;
Fig. 2 is a front view for explaining the structure of a three-dimensional laminating and shaping apparatus according to the second example embodiment of the present invention;
Fig. 3 is a perspective view for explaining a slit had a case of the three-dimensional laminating and shaping apparatus according to the second example embodiment of the present invention;
Fig. 4A is a partially enlarged perspective view for explaining an arm portion of the three-dimensional laminating and shaping apparatus according to the second example embodiment of the present invention;
Fig. 4B is a partially enlarged side view for explaining the arm portion of the three-dimensional laminating and shaping apparatus according to the second example embodiment of the present invention;
Fig. 5A is a schematic plan view for explaining a relationship between an arm and a tape-like seal member of the three-dimensional laminating and shaping apparatus according to the second example embodiment of the present invention;
Fig. 5B is a schematic side view for explaining the relationship between the arm and the tape-like seal member of the three-dimensional laminating and shaping apparatus according to the second example embodiment of the present invention; and
Fig. 6 is a schematic plan view for explaining beams of the three-dimensional laminating and shaping apparatus according to the second example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

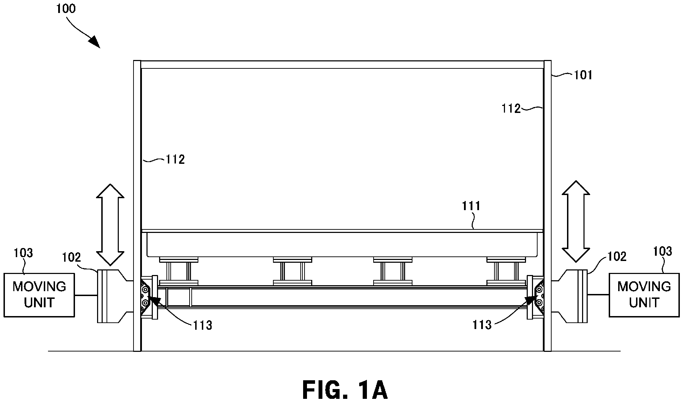

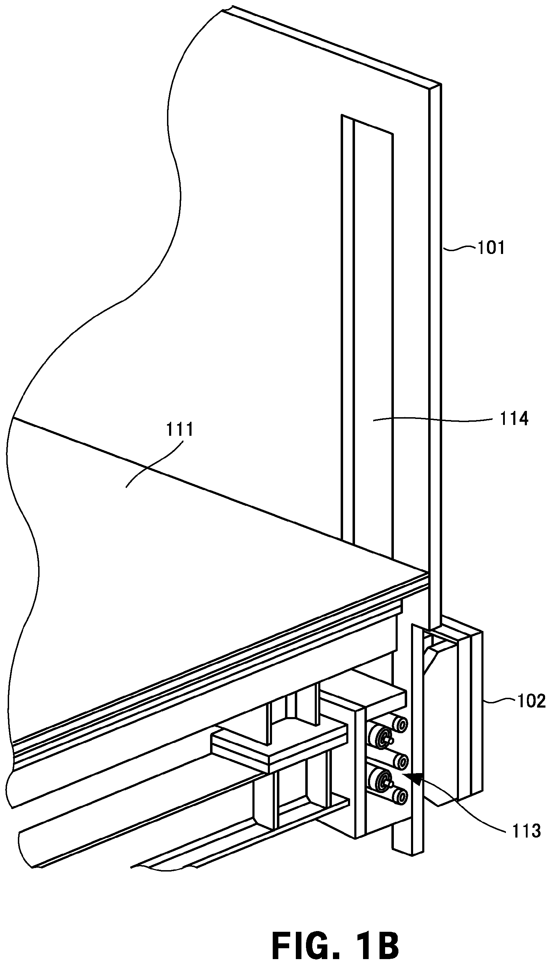

A three-dimensional laminating and shaping apparatus 100 according to the first example embodiment of the present invention will be described with reference to Figs. 1A and 1B. The three-dimensional laminating and shaping apparatus 100 is an apparatus that shapes a three-dimensional laminating and shaping object.

As shown in Figs. 1A and 1B, the three-dimensional laminating and shaping apparatus 100 comprises a case 101, at least two arms 102, moving units 103, slits 114, tape-like seal members 112, and winding structures 113. The case 101 houses a shaping table 111. At least two arms 102 are extended in the horizontal direction of the case 101 and coupled to the shaping table 111 to support the shaping table 111. Each moving unit 103 moves the corresponding arm 102 in the vertical direction of the case 101.

The case 101 includes the slits 114 that are formed on the side walls of the case 101 with extending in the vertical direction of the case 101, through which the arms 102 moving in the vertical direction of the case 101 pass, respectively. The case 101 includes the tape-like seal members 112, each of which has upper and lower ends fixed inside the side wall with extending in the vertical direction of the case 101 to prevent leakage of powder particles to outside of the case 101 through the slit 114 by covering the slit 114. The case 101 includes the winding structures 113, in each of which the tape-like seal member 112 winds so that the tape-like seal member 112 extends to inside of the case 101 in an inwardly convex shape at the position where the end of the arm 102 passes through the slit 114 in the side wall of the case 101.

According to this example embodiment, it is possible to downsize the overall structure of the three-dimensional laminating and shaping apparatus.

### [Second Example Embodiment]

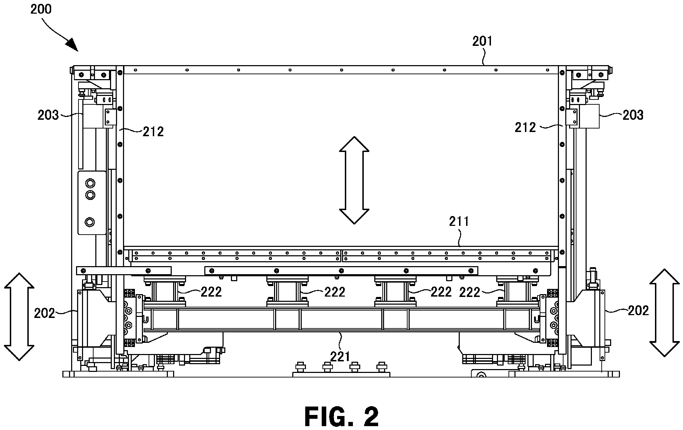

A three-dimensional laminating and shaping apparatus according to the second example embodiment of the present invention will be described next with reference to Figs. 2 to 6. Fig. 2 is a view for explaining the structure of the three-dimensional laminating and shaping apparatus according to this example embodiment. A three-dimensional laminating and shaping apparatus 200 comprises a case 201, arms 202, and drivers 203. Note that members unnecessary for the description of the three-dimensional laminating and shaping apparatus 200 are not illustrated in Fig. 2, as appropriate.

The case 201 is also called a shaping tank, and houses a shaping table 211, a beam 221, support members 222, and the distal ends of the arms 202. In the case 201, a material used for shaping a three-dimensional laminating and shaping object is recoated on the shaping table 211 or a surface of the shaped object, and the recoated material is squeegeed to flatten one material layer. Then, the material layer flattened in the case 201 is applied with a binder, and irradiated with a light beam, thereby hardening the one material layer. Upon completion of hardening of the one material layer, the shaping table 211 is lowered by an amount corresponding to the thickness of the one material layer, and then the next material layer will be processed. This operation is repeated for a plurality of material layers, thereby making it possible to shape a desired three-dimensional laminating and shaping object on the shaping table 211 in the case 201.

Note that the case 201 has a size of about 1,800 mm × 1,000 mm × 750 mm (width × depth × height (vertical depth)). If, for example, an elevating mechanism is installed below the shaping table 211 (case 201) as patent literature 1, the elevating mechanism also needs to have a height of at least 750 mm to move up and down (move in the vertical direction of the case 201) the shaping table 211 by a height of 750 mm of the case 201. Then, the apparatus needs to have a height of at least 1,500 mm, and the overall apparatus becomes large in size. The user of the average height cannot perform the work in the case 201 or look into the case 201 to make a check without using a stepladder, thereby degrading the work efficiency.

The arms 202 are provided to penetrate side walls 212 of the case 201. In addition, the arms 202 are provided at two ends of the case 201 to face each other. The beams 221 is coupled to the ends of the arms 202 in the case 201 (the inner ends of the arms 202), and the support members 222 are provided on the beams 221. The support members 222 are provided between the beams 221 and the bottom surface of the shaping table 211, and the beams 221 and the shaping table 211 are connected (coupled) via the support members 222. The support members 222 support the shaping table 211 from the bottom surface side of the shaping table 211. When the beams 221 and the shaping table 211 are coupled via the support members 222 in this way, the arms 202 and the shaping table 211 are coupled indirectly. Note that the arms 202 are provided at the four corners of the case 201, respectively.

Each driver 203 moves, in the vertical direction of the case 201, the outer end of the corresponding arm 202, that is, a portion protruding outside the side wall 212. With respect to each arm 202, since the outer end and the inner end of the arm 202 are connected, when the outer end of the arm 202 moves in the vertical direction of the case 201, the inner end of the arm 202 also moves in the vertical direction of the case 201 in accordance with the movement of the outer end of the arm 202. Each driver 203 includes a ball screw and a linear guide, which move the outer end of the arm 202 in the vertical direction of the case 210. Note that a mechanism of moving the outer end of the arm 202 in the vertical direction by the driver 203 is not limited to the above mentioned method.

Since the inner end of each arm 202 is coupled to the beams 221, and the support members 222 are coupled to (the bottom surface of) the shaping table 211, when the outer end of the arm 202 moves in the vertical direction, the inner end of the arm 202 and the beams 221 also move in the vertical direction, and the shaping table 211 also moves in the vertical direction of the case 201 in accordance with the movements of these portions 203, 202, 221, 222 and 211. That is, the arms 202, the drivers 203, the beams 221, and the support members 222 serve as an elevating mechanism of moving up and down the shaping table 211.

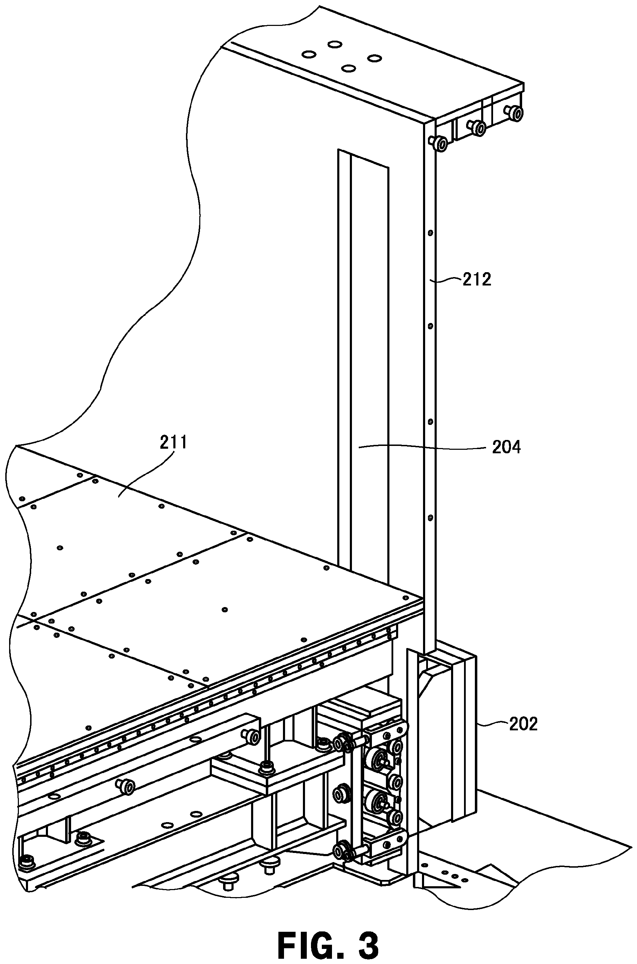

Fig. 3 is a perspective view for explaining a slit 204 had a case 201 of the three-dimensional laminating and shaping apparatus 200 according to this example embodiment. The slit 204 extending in the vertical direction of the case 201 is formed in the side wall 212 on the side surface of the case 201. The arm 202 passes through the slit 204 to inside of the case 201. That is, the arm 202 is arranged to penetrate the slit 204. The arm 202 moves in the vertical direction of the case 201 in a space formed by the slit 204 in a vertically long shape. Note that although one of the four corners of the case 201 has been discussed with reference to Fig. 3, similar slits 204 are also formed at the remaining three corners of the side walls 212, respectively. That is, the slit 204 is formed at each of the four corners of the case 201. In similar to Fig. 3, the arms 202 are attached to penetrate the four slits 204, respectively, and thus the four arms 202 are provided.

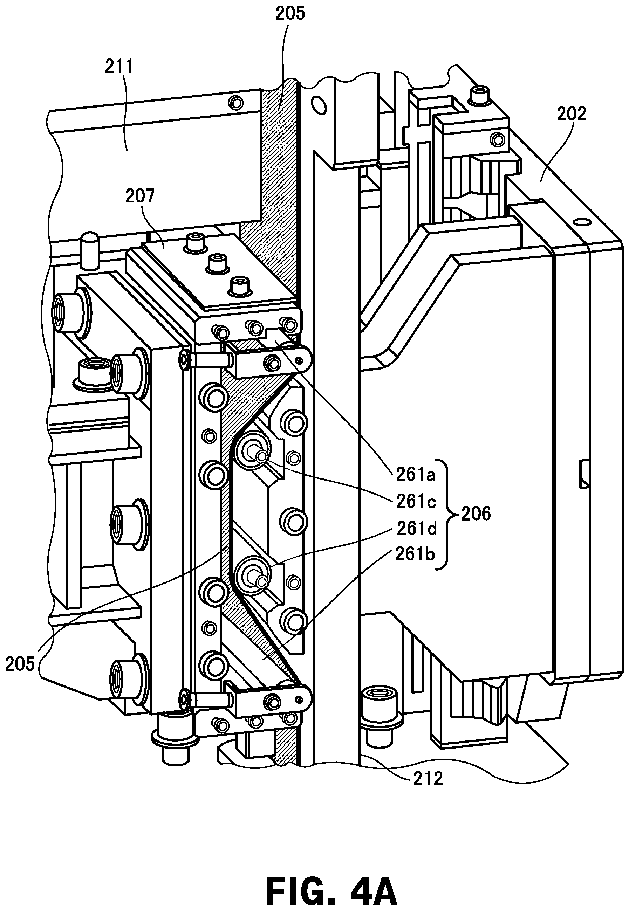

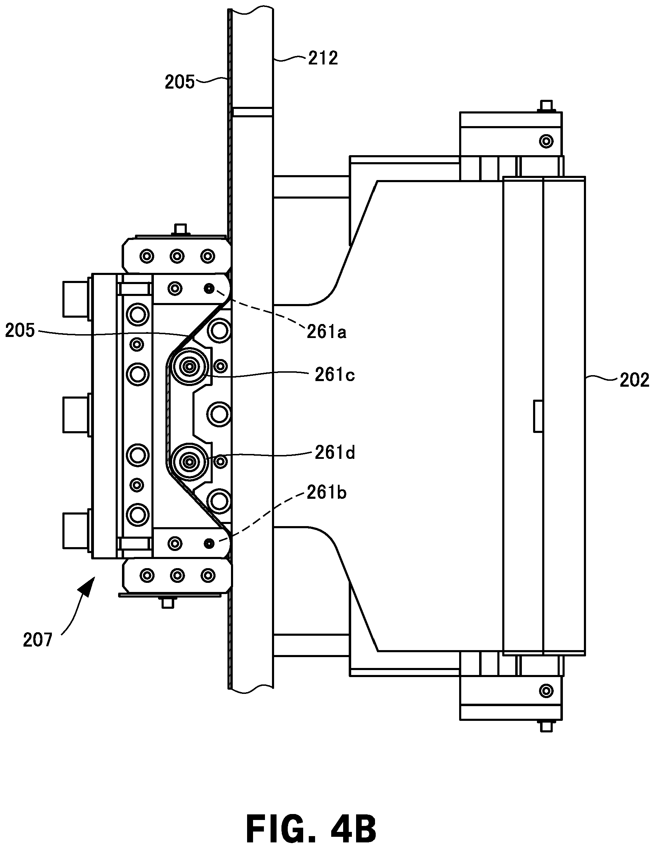

Fig. 4A is a partially enlarged perspective view for explaining an arm portion of the three-dimensional laminating and shaping apparatus according to this example embodiment. Fig. 4B is a partially enlarged side view for explaining the arm portion of the three-dimensional laminating and shaping apparatus according to this example embodiment. Note that Figs. 4A and 4B do not illustrate a side surface portion (cover) of a housing 207 so as to easily observe the arrangement of a winding structure 206.

A tape-like seal member 205 is attached to each slit 204 inside of the side wall 212 and the slit 204 is covered with the tape-like seal member 205. The tape-like seal member 205 is adhered to the side wall 212 of the case 201 by, for example, fixing the upper and lower ends of the tape-like seal member 205 to the side wall 212 of the case 201. By covering the slit 204 with the tape-like seal member 205, the material used for shaping the three-dimensional laminating and shaping object is prevented from leaking outside from the case 201 through the slit 204. The tape-like seal member 205 is a stainless steel member but may be a member made of another anticorrosive metal, aluminum, or copper. The tape-like seal member 205 has a thickness of about 0.15 mm, and is a thin and flat member. Note that the thickness of the tape-like seal member is not limited to the about 0.15 mm.

Since the arm 202 passes into the case 201 through the slit 204 so as to penetrate the slit 204, and moves in the vertical direction of the case 201, the tape-like seal member 205 obstructs or hinders the vertical movement of the arm 202. To solve this problem, the winding structure 206 in which the tape-like seal member 205 winds is provided in the periphery of the end of the arm 202 at the side wall 212 of the case 201. The tape-like seal member 205 winds in the winding structure 206 so that the tape-like seal member 205 extends toward inside of the case 201 in a convex shape at the position of the end of the arm 202 passing into the case 201 through the slit 204.

The winding structure 206 is provided in the periphery of the end of the arm 202. That is, when the inside of the case 201 across the side wall 212 of the case 201 is set as the front side of the arm 202 and the outside of the case 201 across the side wall 212 is set as the rear side of the arm 202, the winding structure 206 is provided in the periphery of an end of the front side of the arm 202. Since the arm 202 moves in the vertical direction of the case 201, the end of the arm also moves in the vertical direction in accordance with the vertical movement of the arm 202, and the winding structure 206 also moves in the vertical direction in accordance with the vertical movement of the end of the arm.

The winding structure 206 includes four rollers 261a, 261b, 261c and 261d. The winding structure 206 includes the roller 261a and 261b arranged at top and bottom of the winding structure 206 to press the tape-like seal member 205 against the side wall 212 from the outside of the tape-like seal member 205. Furthermore, the winding structure 206 includes the roller 261c and 261d arranged in middle of the winding structure 206 to extend the tape-like seal member 205 toward inside of the case 201 from the inside of the tape-like seal member 205.

That is, the winding structure 206 includes the two rollers 261a and 261b outside the tape-like seal member 205 (inside the case 201 across the member 205), and the two rollers 261c and 261d inside the tape-like seal member 205 (outside the case 201 across the member 205). The four rollers 261a, 261b, 261c, and 261d are arranged at positions corresponding to the vertices of a trapezoid. When the four rollers 261a, 261b, 261d, and 261c are connected in order by a line, a trapezoidal shape is formed. Note that the arrangement positions of the rollers 261a, 261b, 261c, and 261d are not limited to those shown in Fig. 4A.

The housing 207 houses the winding structure 206. Since the winding structure 206 is completely housed in the housing 207 (including the not shown side surface portion), a situation in which the material used for shaping the three-dimensional laminating and shaping object adheres to the rollers 261a, 261b, 261c, and 261d to hinder the movements of the rollers 261a, 261b, 261c, and 261d is prevented. That is, the housing 207 serves as the cover of the winding structure 206. As described above, since the winding structure 206 is covered with the housing 207 to reduce dust adhering to the rollers 261a, 261b, 261c, and 261d, a number of times of cleaning is decreased and the labor of maintenance are also reduced.

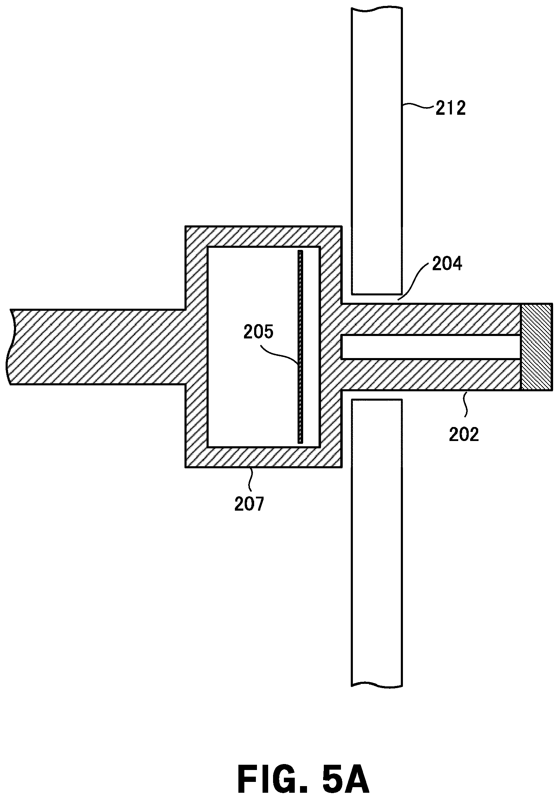

Fig. 5A is a schematic plan view for explaining the relationship between the arm and the tape-like seal member of the three-dimensional laminating and shaping apparatus according to this example embodiment. The width of the tape-like seal member 205 is wider than that the width of the slit 204. Therefore, the slit 204 is covered with the tape-like seal member 205 without any gap, and the material used for shaping the three-dimensional laminating and shaping object can be prevented from leaking outside from the case 201 through the slit 204.

The tape-like seal member 205 separates from the inner surface of the side wall 212 of the case 201 at a position where the arm 202 passes through the side wall 212, and floats from the side wall 212 toward the inside of the case 201. That is, the tape-like seal member 205 winds in the winding structure 206 to extend in a convex shape toward the inside of the case 201 at the position of the end (front end) of the arm 202 passing into the case 201 through the slit 204 of the side wall 212. That is, when the arm 202 passes through the slit 204 of the side wall 212, the tape-like seal member 205 is lifted (turned up) to form a gap between the member 205 and an inside surface of the side wall 212, and some components of the arm 202 passes through the gap. The extension or bulge of the tape-like seal member 205 moves in the vertical direction of the case 201 in accordance with the vertical movement of the arm 202. In this case, the tape-like seal member 205 cannot close the slit 204 at a portion of the arm 202 but a part of the housing 207 of the arm 202 sandwiched between the member 205 and the side wall 212 closes the slit 204. Thus, the sealability in the case 201 is maintained. Note that in Fig. 5A, there is a gap between the housing 207 and the side wall 212 to avoid the view from becoming complicated. In fact, however, the housing 207 and the side wall 212 are in tight contact with each other, as shown in Figs. 4A and 4B.

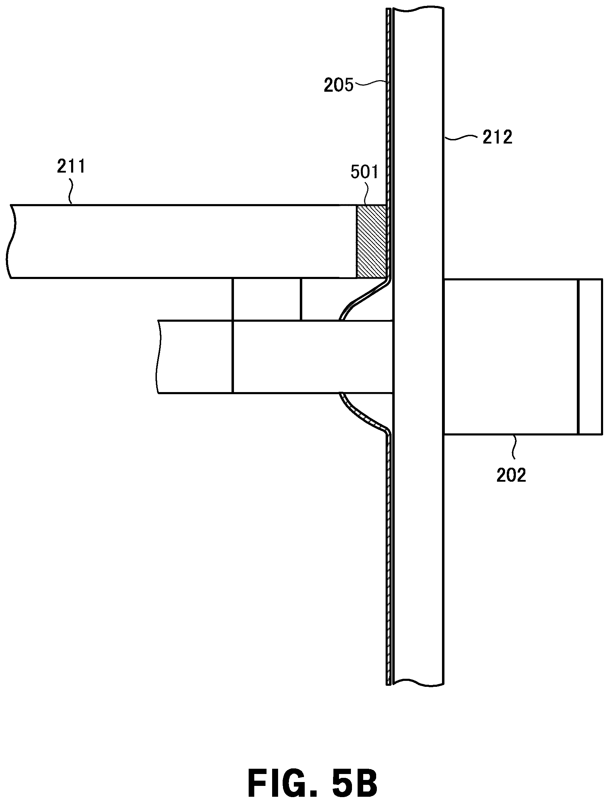

Fig. 5B is a schematic side view for explaining the relationship between the arm and the tape-like seal member of the three-dimensional laminating and shaping apparatus according to this example embodiment. Note that Fig. 5B does not illustrate the housing 207 to avoid the view from becoming complicated. To bring the shaping table 211 and the inner surface of the side wall 212 of the case 201 into tight contact with each other, a contact member 501 may be provided on a side surface of the end of the shaping table 211 toward the side wall 212. The contact member 501 may be any soft member such as a felt.

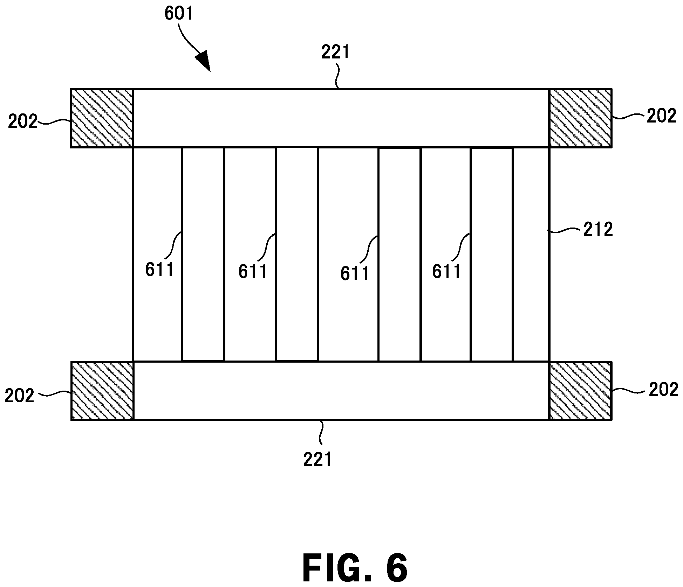

Fig. 6 is a schematic plan view for explaining the beams of the three-dimensional laminating and shaping apparatus according to this example embodiment. The beams 601 include beams 221 in the horizontal direction parallel to a direction in which the arms 202 passes through the slits 204 of the case 201, and beams 611 in the vertical direction perpendicular to the horizontal direction. The beams 601 have a shape in which the four beams 611 in the vertical direction are bridged between the two beams 221 in the horizontal direction.

Note that the numbers of beams 221 in the horizontal direction and beams 611 in the vertical direction used in the beams 601 are not limited to the above ones. The beams 601 may have a shape in which the beams 221 in the horizontal direction and the beams 611 in the vertical direction are arranged in a grid pattern.

The beams 601 are coupled to the arms 202. The shaping table 211 is placed on the beams 601 via the support members 222. Since the beams 601 move in the vertical direction on the case 201 in accordance with the vertical movements of the arms 202, the shaping table 211 also moves in the vertical direction on the case 201.

According to this example embodiment, since the elevating mechanism of the shaping table is arranged on the side portion of the case, it is possible to downsize the overall structure of the three-dimensional laminating and shaping apparatus. Furthermore, since the elevating mechanism is arranged on the side portion of the case, the height of the apparatus is decreased, thereby improving the work efficiency of the user.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

## Claims

1. A three-dimensional laminating and shaping apparatus comprising:
a case that houses a shaping table;
at least two arms that are extended in a horizontal direction of the case and coupled to the shaping table to support the shaping table; and
a moving unit that moves the at least two arms in a vertical direction of the case,
the case including
a slit that is formed on a side wall of the case with extending in the vertical direction of the case, and through which one of the at least two arms moving in the vertical direction of the case passes,
a tape-like seal member that has upper and lower ends fixed inside the side wall with extending in the vertical direction of the case to prevent leakage of powder particles to outside of the case through the slit by covering the slit, and
a winding structure in which the tape-like seal member winds so that the tape-like seal member extends to inside of the case in an inwardly convex shape at a position where an end of the one of the at least two arms passes through the slit in the side wall of the case.

2. The three-dimensional laminating and shaping apparatus according to claim 1, wherein said winding structure is provided in a periphery of the end of the one of the at least two arms and moves in the vertical direction of the case together with the end of the one of the at least two arms.

3. The three-dimensional laminating and shaping apparatus according to claim 1 or 2, wherein said winding structure includes two rollers provided one side of said tape-like seal member and two rollers provided another side of said tape-like seal member.

4. The three-dimensional laminating and shaping apparatus according to claim 1, 2, or 3, further comprising a housing that houses said winding structure.

5. The three-dimensional laminating and shaping apparatus according to any one of claims 1 to 4, further comprising a driver that moves the end of the one of the at least two arms in the vertical direction of the case outside the case.

6. The three-dimensional laminating and shaping apparatus according to any one of claims 1 to 5, wherein
said slit is formed at each of four corners of the case, and
the at least two arms are provided somewhere in the four corners of the case.

7. A method of manufacturing a three-dimensional laminating and shaping apparatus including
a case that houses a shaping table,
at least two arms that are extended in a horizontal direction of the case and coupled to the shaping table to support the shaping table, and
a moving unit that moves the at least two arms in a vertical direction of the case,
the method comprising:
forming a slit on a side wall of the case with extending in the vertical direction of the case, through which one of the at least two arms moving in the vertical direction of the case passes;
providing a tape-like seal member that has upper and lower ends fixed inside the side wall with extending in the vertical direction of the case to prevent leakage of powder particles to outside of the case through the slit by covering the slit; and
providing a winding structure in which the tape-like seal member winds so that the tape-like seal member extends to inside of the case in an inwardly convex shape at a position where an end of the one of the at least two arms passes through the slit in the side wall of the case.
